# FASCICULE DE BREVET EUROPEEN

(11) **EP 2 906 895 B1**
(45) Date de publication et mention de la délivrance du brevet: **14.12.2016**
(21) Numéro de dépôt: 13786317.1
(22) Date de dépôt: 07.10.2013
(51) Int. Cl.: F28D 1/03, F28D 7/10, F28D 9/00, F28D 20/00, F28D 20/02, B23K 20/02, B23P 15/26

(54) **PROCEDE DE REALISATION D'UN ECHANGEUR DE CHALEUR CONTENANT UN MATERIAU A CHANGEMENT DE PHASE, ECHANGEUR OBTENU ET UTILISATIONS AUX HAUTES TEMPERATURES**
HERSTELLUNGSVERFAHREN FÜR EINEN WÄRMETAUSCHER MIT PHASENWECHSELMATERIAL, ENTSPRECHENDEN WÄRMETAUSCHER UND SEINE HOCHTEMPERATURVERWENDUNG
METHOD FOR MANUFACTURING A HEAT EXCHANGER CONTAINING A PHASE-CHANGE MATERIAL, EXCHANGER OBTAINED AND USES AT HIGH TEMPERATURES

(30) Priorité: 09.10.2012 FR 1259604
(43) Date de publication de la demande: 19.08.2015
(73) Titulaire: Commissariat à l'Énergie Atomique et aux Énergies Alternatives, 75015 Paris (FR)
(72) Inventeur: BENGAOUER, Alain, 38920 Crolles (FR); ROUX, Guilhem, F-38120 Saint-egreve (FR)
(74) Mandataire: Nony
(86) Numéro de dépôt international: PCT/IB2013/059175
(87) Numéro de publication internationale: WO 2014/057411

(56) Documents cités:
- WO-A1-2006/067349
- WO-A1-2011/036207
- DE-A1- 4 114 669
- DE-A1-102010 004 358
- DE-C1- 4 241 214
- FR-A1- 2 850 741
- US-A- 4 124 018
- US-A- 5 249 359
- US-A1- 2010 065 244

## Description

### Domaine technique

La présente invention concerne un procédé de réalisation d'un module d'échangeur de chaleur comportant au moins un circuit de fluide comportant au moins un canal de circulation de fluide, au moins une cellule contenant un matériau à changement de phase (MCP). Un module échangeur de chaleur selon l'invention peut comporter au moins une face externe destinée à être en contact avec un flux de chaleur provenant d'un milieu environnant,

Un échangeur obtenu selon le procédé de l'invention permet grâce au matériau à changement de phase qu'il intègre, de stocker la chaleur ou de lisser les fluctuations de température de systèmes.

Les applications visées par un échangeur selon l'invention sont nombreuses et concernent les procédés dans lesquels les échanges thermiques se font à hautes températures. Par « hautes températures », on entend au sens de l'invention, des températures au-dessus de 200°C, de préférence comprises entre 400 et 800°C.

Plus particulièrement, pour le stockage thermique, un échangeur selon l'invention peut stocker de l'énergie pour une utilisation différée. Par exemple, un échangeur selon l'invention peut stocker de la chaleur produite par un récepteur solaire dans la journée pour une utilisation dans la soirée ou dans la nuit pour des besoins de chauffage, ou encore récupérer de la chaleur perdue de manière cyclique par un procédé industriel (fonderie, aciérie) pour alimenter un autre procédé.

Plus particulièrement, pour le lissage des fluctuations de températures, un échangeur de chaleur selon l'invention peut garantir la température de fonctionnement d'un système et ainsi assurer sa sécurité ou augmenter sa durée de vie. Par exemple, un échangeur selon l'invention peut protéger les composants d'une centrale solaire à concentration contre les variations d'ensoleillement (passage de nuages), des composants micro-électroniques contre des surchauffes ou encore peut limiter des excursions thermiques dans les batteries.

Les échangeurs de chaleur connus comprennent un ou au moins deux circuits à canaux de circulation interne de fluide. Dans les échangeurs à un seul circuit, les échanges thermiques se réalisent entre le circuit et un fluide environnant dans lequel il baigne. Dans les échangeurs à au moins deux circuits de fluide, les échanges thermiques se réalisent entre les deux circuits de fluide.

Il est connu des réacteurs chimiques qui mettent en oeuvre un procédé en continu selon lequel on injecte simultanément une quantité faible de co-réactants, en présence ou non de catalyseurs, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

Les échangeurs de chaleur contenant un matériau à changement de phase sont connus, comme détaillé par la suite. Ils comportent en général un seul circuit de fluide avec une pluralité de canaux de circulation de fluide, et une pluralité de cellules contenant un matériau à changement de phase (MCP), dans lesquels chaque canal est adjacent à une cellule. Il existe aussi des échangeurs utilisant une pluralité de canaux fluides mais une seule cellule contenant un matériau MCP.

La présente invention concerne aussi bien la réalisation d'échangeurs de chaleur à au moins un circuit de fluide assurant l'échange thermique entre plusieurs fluides, un absorbeur de chaleur assurant la transmission d'un flux de la surface extérieure vers un fluide ou un réacteur-échangeur dans lequel une réaction chimique se produit dans l'un des canaux alors qu'un autre ou plusieurs autres canaux ont pour fonction de contrôler la température.

Aussi, par « échangeur de chaleur», il faut comprendre dans le cadre de l'invention, aussi bien un échangeur-réacteur qu'un échangeur de chaleur contenant un matériau à changement de phase à fonctions d'échanges et/ou de stockage et/ou de restitution thermiques.

### Art antérieur

Il est connu que les matériaux à changement de phase (MCP) sont des matériaux aptes à présenter un changement de phase physique réversible dont la variation d'enthalpie (ou chaleur latente) associée permet le stockage et déstockage de l'énergie thermique. En densité volumique, la capacité de stockage d'un matériau MCP est typiquement trois à quatre fois supérieure à celle qu'il est possible d'atteindre par la chaleur sensible. Le changement de phase d'un matériau MCP est de nature isothermique, c'est à dire qu'il a lieu à température constante. Ainsi, par exemple, à titre de référence, la chaleur latente de fusion du cuivre est de 13,3 kJ/mol pour une capacité calorifique de 24,5 J/mol/K, c'est-à-dire qu'il faut un écart de température de plus de 500°C pour stocker par chaleur sensible la même énergie que par chaleur latente : [1].

Il existe quatre types de changement de phase pour les matériaux MCP, respectivement solide-solide, solide-liquide, solide-vapeur et liquide-vapeur. La chaleur latente et la variation volumique d'un matériau MCP sont d'autant plus élevées que la variation d'ordre (donnée par la variation d'entropie) associée à la transition de phase est importante. Ainsi, par exemple, une variation d'ordre solide-vapeur est supérieure à une variation d'ordre solide-liquide laquelle est elle-même supérieure à une variation d'ordre solide-solide. Le changement de phase liquide-vapeur s'accompagne d'une augmentation de volume très importante, alors que changement de phase solide-solide présente l'avantage d'entraîner des faibles variations de volume, mais offre une chaleur latente assez faible, typiquement de quelques dizaines de kJ/kg. Le changement de phase liquide-solide offre une chaleur latente de changement de phase importante typiquement quelques centaines de kJ/kg pour un changement de volume modéré.

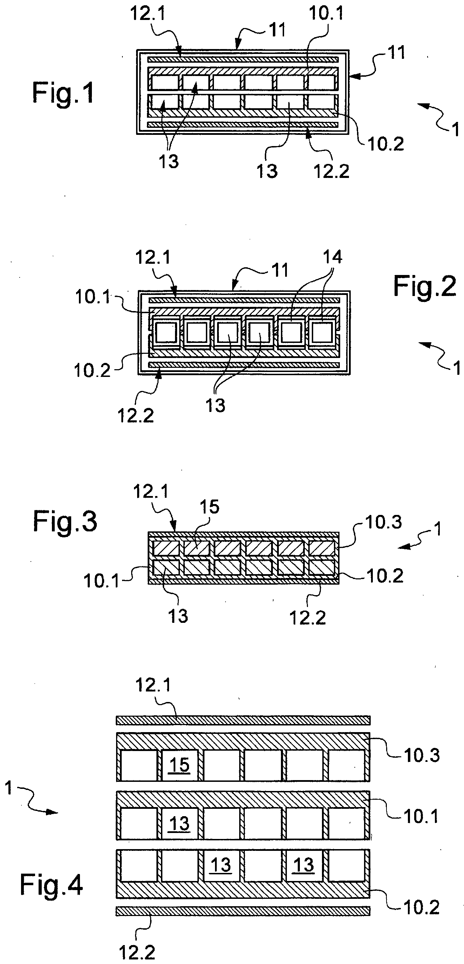

Il existe plusieurs familles de matériaux MCP allant de matériaux simples à des matériaux composés : on pourra notamment se reporter à la figure 2 de la publication [2]. Parmi les matériaux simples, on distingue classiquement les matériaux organiques et les matériaux inorganiques. Parmi les matériaux composés, on distingue les composés eutectiques de types organique-organique, organique-inorganique et inorganique-inorganique. Ces familles de matériaux MCP peuvent aussi être classifiées selon la nature chimique des matériaux : les paraffines, les acides gras, les hydrates de sels, les nitrates,...On pourra se reporter à la publication [2] qui illustre une classification de familles de matériaux MCP en fonction de leur densité volumique de stockage thermique.

En pratique, il est connu de choisir un matériau MCP en fonction de la température en fonctionnement d'un système pour lequel le matériau est destiné.

Cependant, la chaleur latente n'est pas le seul critère pour le déploiement de matériaux à changements de phase (MCP), comme l'indiquent les auteurs de la publication [2] : ceux-ci précisent que de manière générale, le choix d'un matériau MCP peut être fait en tenant compte de différents critères que l'on peut énumérer comme suit :
- thermodynamique : une température de changement de phase adéquate, une chaleur latente élevée, une conductivité thermique élevée, une diffusivité thermique élevée ;
- propriétés physiques intrinsèques: densité élevée, variation volumique faible, reproductibilité et stabilité en cyclage;
- propriétés chimiques: stabilité chimique à long terme, compatibilité avec les autres matériaux du système, réversibilité du changement de phase, absence de décomposition chimique, non toxicité, non inflammabilité, non explosibilité,
- absence de sous-saturation, pas de surfusion, absence de ségrégation;
- économique : abondance, disponibilité, faible coût, recyclabilité.

Le choix de MCP permettant le stockage thermique est large et la littérature propose plusieurs articles de revue de ces choix : on pourra se reporter aux publications [2], [3] et [4].

Dans les gammes de températures qui peuvent intéresser les procédés fonctionnant aux hautes températures, tels que le stockage solaire, les procédés de reformage ou de valorisation de la chaleur haute température, les matériaux MCP principalement utilisés sont des sels fondus et des matériaux métalliques.

Les sels fondus sont généralement caractérisés par une très forte chaleur latente et une faible voire très faible conductivité. Par exemple, les sels de lithium (LiOH) ont une chaleur latente de changement de phase liquide-solide de l'ordre de 875 kJ/kg mais présentent une conductivité de l'ordre d'1 W/m/K. La mise en oeuvre de ces matériaux implique notamment une gestion efficace des flux thermiques par une conception spécifique de leurs cellules de confinement et des éléments constituant l'enveloppe, et une bonne maîtrise de la tenue à la corrosion des enveloppes: on pourra se reporter à la publication [5]. Il est par ailleurs suggéré dans cette publication que la forte augmentation de volume lors de la fusion, typiquement de 1 à 30 %, la surfusion et le coût sont des limitations à l'usage des sels fondus.

Les matériaux métalliques, malgré une chaleur latente généralement plus faible que celle des sels fondus, constituent une alternative à ces derniers. Ainsi, les auteurs de la publication [6] identifient les alliages métalliques Al-Cu, Al-Si, Al-Cu-Mg et Al-Si-Mg comme judicieux pour les procédés utilisant la combustion de combustibles fossiles et l'alliage Mg2Si-Si pour des applications solaires. Les auteurs de la publication [7] proposent quant à eux de nouveaux alliages métalliques ternaires pour des applications dans lesquelles les températures sont comprises entre 430 et 730°C.

En ce qui concerne la fabrication d'enveloppes destinées à contenir des matériaux MCP, les cellules de celles-ci doivent présenter une réactivité chimique faible vis-à-vis du matériau MCP, de façon à garantir son confinement et l'intégrité des enveloppes.

On peut distinguer la structure desdites enveloppes en fonction des dimensions des matériaux MCP.

Pour des petites dimensions, généralement de l'ordre du millimètre, les enveloppes constituent ce que l'on peut désigner par microencapsulations du MCP et sont utilisées en lit fixe, en lit fluidisé ou en suspension, tel que décrit dans la publication [1] et le brevet US 4,873,038.

La demande de brevet WO 2010/034954 divulgue un procédé de fabrication d'un agglomérat de microcapsules de MCP appliqué à des procédés de séparation de gaz, le MCP ayant pour fonction de limiter les fluctuations de températures qui limitent le rendement des procédés.

La demande de brevet WO2010/146197 décrit un matériau composite formé d'une structure en carbone partiellement remplie d'un mélange LiOH/KOH en tant que matériau MCP. La faible conductivité thermique du mélange LiOH/KOH est compensée par la conductivité thermique élevée du carbone. Les températures de changement de phase visées vont de 225°C à 488°C selon les compositions choisies de chacun des deux composants du mélange LiOH/KOH.

Pour des plus grandes dimensions, généralement de l'ordre du centimètre à la la dizaine de centimètres, les enveloppes constituent ce que l'on peut désigner par macroencapsulations du MCP. La conception de ces enveloppes de macroencapsulation doit alors garantir une capacité de stockage adaptée au besoin et une capacité d'échange thermique suffisante avec le fluide caloporteur ou la surface exposée au flux dans le cas d'un échange surfacique. Comme indiqué précédement, lorsque les MCP sont des sels, leur faible conductivité impose une conception spécifique de leurs cellules de confinement et des éléments constituant l'enveloppe, soit avec des ailettes, soit avec des nids d'abeilles, soit avec des mousses ou tout autre dispositif favorisant l'échange thermique : on pourra se reporter pour plus de détails aux publications [5], [8]. Lorsque les MCP sont des métaux, la conductivité thermique n'est plus un facteur aussi limitant et des cellules de confinement de plus grandes dimensions peuvent être utilisées : on pourra se reporter pour plus de détails aux publications [9], [10].

Différents documents décrivent la réalisation d'échangeur de chaleur comportant au moins un circuit de fluide avec des canaux de circulation de fluide, des cellules contenant un matériau MCP, dans lequel chaque canal est adjacent à au moins une cellule.

Le brevet US 7718246 divulgue une structure en nid d'abeille partiellement poreuse intégrant des cellules de confinement du MCP et des canaux de circulation du fluide d'échange adajacents aux cellules.

Le brevet US 4124018 décrit un récepteur solaire couplé à un échangeur contenant un matériau MCP, plutôt dédié à des applications de relativement basses températures. Un procédé de réalisation de l'échangeur est décrit : il consiste à assembler par soudage diffusion une série de plaques planes dont une partie de la surface est masquée, puis l'échangeur assemblé est pressurisé de sorte à former les canaux de circulation fluide et les cellules de confinement du MCP soient formés. Puis, les cellules formées sont remplies par un MCP en fusion via des ports alors que l'air contenu dans les cellules est évacué via des évents. Les ports et les évents sont ensuite rendus étanches. La technique de fabrication décrite dans ce brevet US 4124018 nécessite des épaisseurs de paroi faibles, ce qui conduit à une faible tenue mécanique de l'échangeur et donc en limite le domaine d'application. L'utilisation d'un tel échangeur n'est ainsi pas envisageable aux fortes pressions et/ou hautes températures.

Le brevet DE102010004358 divulgue une structure d'échangeur en nid d'abeille en céramique obtenue par une technique d'extrusion, ce qui permet le stockage de MCP (sel ou métal) à haut point de fusion, typiquement supérieur à 800°C. Si la très faible taille des canaux de circulation de fluide et des cellules de MCP, typiquement inférieure à 2 mm, permet d'obtenir de bons échanges thermiques, en revanche les formes susceptibles d'être obtenues par la technique d'extrusion sont limitées. En effet, les canaux obtenus par extrusion ne peuvent être que rectlignes. Cette limitation de formes exclut l'utilisation de ces techniques pour les échangeurs dans lesquels la courbure des canaux est primordiale pour assurer le mélanges de réactifs et les échanges thermiques.

A la connaissance des inventeurs, il n'existe pas d'état de l'art qui décrive la réalisation d'échangeurs de chaleur comportant au moins un circuit de fluide avec des canaux de circulation de fluide, des cellules contenant un matériau MCP de type métal ou sel, dans lequel chaque canal est adjacent à au moins une cellule et qui permette d'obtenir des dimensions et formes de cellules adaptables à souhait, typiquement entre 5 et 500 mm et ce, afin d'obtenir une grande capacité de stockage volumique et une vitesse de chauffage/restitution thermique élévée.

Par ailleurs, il est connu de réaliser les échangeurs de chaleur, dits à plaques, existants qui ne contiennent pas de matériaux MCP selon différentes techniques.

Les canaux de circulation de ces échangeurs peuvent être réalisés par emboutissage de plaques, le cas échéant par ajout de feuillards pliés sous forme d'ailettes ou par usinage de rainures. L'usinage peut être réalisé par des moyens mécaniques, par exemple par fraisage ou par voie chimique. L'usinage chimique est usuellement appelé gravage chimique ou électrochimique.

L'assemblage des plaques entre elles a pour objectif d'assurer l'étanchéité et/ou la tenue mécanique des échangeurs, notamment la tenue à la pression des fluides circulant à l'intérieur.

Plusieurs techniques d'assemblage sont connues et sont mises en oeuvre en fonction du type d'échangeur à plaques souhaité. L'assemblage peut ainsi être obtenu par des moyens mécaniques, tels que des tirants maintenant l'empilement serré entre deux plaques épaisses et rigides disposées en extrémité de l'empilement. L'étanchéité des canaux est alors obtenue par écrasement de joints rapportés. L'assemblage peut être également obtenu par soudage, généralement limité à la périphérie des plaques, ce qui nécessite parfois d'insérer, ultérieurement au soudage, l'échangeur dans une calandre pour permettre sa tenue à la pression des fluides. L'assemblage peut encore être obtenu par brasage, en particulier pour des échangeurs pour lesquels des ailettes sont ajoutées. L'assemblage peut enfin être obtenu par soudage par diffusion (soudage-diffusion).

Les deux dernières techniques citées permettent de réaliser des échangeurs de chaleur particulièrement performants en termes de tenue mécanique. En effet, grâce à ces deux techniques, l'assemblage est obtenu non seulement à la périphérie des plaques mais aussi à l'intérieur de l'échangeur.

Les échangeurs de chaleur à plaques obtenus par soudage par diffusion présentent des joints encore plus performants mécaniquement que les joints des échangeurs obtenus par brasage du fait même de l'absence du métal d'apport requis pour le brasage.

Le soudage-diffusion consiste à obtenir un assemblage à l'état solide en appliquant une force à chaud sur les pièces à assembler pendant un temps donné. La force appliquée a une fonction double: elle permet l'accostage, c'est-à-dire la mise en contact des surfaces à souder, et elle facilite l'élimination par fluage-diffusion de la porosité résiduelle dans les joints (interfaces).

La force peut être appliquée par compression uniaxiale, par exemple à l'aide d'une presse équipée d'un four ou simplement à l'aide de masses disposées au sommet de l'empilement des pièces à assembler. Ce procédé est communément appelé soudage-diffusion uniaxial et il est appliqué industriellement pour la fabrication d'échangeurs de chaleur à plaques.

Une limitation importante du procédé soudage-diffusion uniaxial tient au fait qu'il ne permet pas de souder des joints d'orientation quelconque par rapport à la direction d'application de la force de compression uniaxiale.

Un autre procédé alternatif pallie cet inconvénient. Dans cet autre procédé, la force est appliquée par la pression d'un gaz en utilisant un conteneur étanche sous vide. Ce procédé est communément appelé compression isostatique à chaud (CIC). Un autre avantage du procédé de soudage-diffusion par CIC comparativement au procédé de soudage-diffusion uniaxial est qu'il est plus largement répandu à l'échelle industrielle. En effet, la CIC est aussi utilisée pour le traitement par lots de pièces de fonderie ainsi que pour la compaction de poudres.

Dans le procédé de soudage-diffusion par CIC, l'empilement des pièces est préalablement encapsulé dans un conteneur étanche pour éviter que le gaz ne pénètre dans les interfaces constituées par les surfaces à souder. La pression de gaz habituellement utilisée est élevée, de l'ordre de 500 à 2000 bar, typiquement 1000 bar. La pression minimale de fonctionnement des enceintes industrielles adaptées pour mettre en oeuvre la CIC est quant à elle comprise entre 40 et 100 bar.

On décrit en référence avec la figure 1, la fabrication connue d'un échangeur de chaleur 1 recevant sur une de ses faces un flux de chaleur provenant d'un milieu envionnant et le transmettant à un fluide caloporteur. Des rainures sont réalisées dans deux plaques métalliques 10.1, 10.2 par usinage chimique ou mécanique. Les plaques métalliques 10.1, 10.2 sont alors nettoyées et positionnées l'une contre l'autre avec leurs rainures en regard dans un conteneur 11. Des plaques 12.1, 12.2 sont positionnées de part et d'autre des deux plaques rainurées 10,1, 10.2 à l'intérieur du conteneur 11. Le vide est alors fait à l'intérieur du conteneur afin d'en extraire les gaz nocifs au soudage puis un cycle de compression isostatique à chaud (CIC) est appliqué, qui permet d'obtenir le soudage-diffusion des plaques 10.1, 10.2, 12.1, 12.2. Les canaux 13 de circulation du fluide caloporteur sont ainsi constitués par les rainures des plaques 10,1, 10.2 elle-mêmes, dont les bordures sont assemblées par soudage-diffusion.

Il est déjà connu plusieurs solutions pour réaliser des échangeurs de chaleur par soudage-diffusion par CIC tout en maîtrisant la géométrie des canaux et la qualité des interfaces.

Une première solution connue consiste à utiliser pour chaque canal un tube pré-formé, et de souder au moins une extrémité de ce dernier de manière étanche au conteneur lui-même étanche. Chaque tube est au préalable inséré dans une rainure d'une plaque puis les tubes insérés dans les rainures d'une même plaque sont mis en sandwich avec une autre plaque rainurée ou non qui est adjacente. Cette solution connue de fabrication est décrite en référence avec la figure 2 : des tubes pré-formés 14 sont insérés individuellement dans les rainures entre les plaques 10.1, 10.2. Les canaux 13 de circulation du fluide caloporteur sont ainsi constitués par les tubes 14 et délimités par les rainures des plaques 10.1, 10.2 assemblés avec eux par soudage-diffusion.

Une seconde solution connue est décrite dans la demande de brevet WO 2006/067349. Elle consiste essentiellement à éviter que les interfaces à souder ne débouchent dans les canaux. Ainsi, la solution selon cette demande de brevet consiste à réaliser dans des plaques métalliques des rainures à section ouverte à leurs sommets puis d'obturer ceux-ci individuellement par soudage d'une lame mince métallique, en laissant ainsi une ou les deux extrémité(s) des rainures accessibles au gaz de pressurisation.

Une troisième solution WO 2011/036207 connue consiste à réaliser une zone creuse dans une plaque avec un organe fusible à l'empiler entre deux plaques pleines, puis réaliser un cycle de CIC en faisant varier les conditions de température et de pression pour obtenir dans un premier temps un soudage-diffusion initial entre plaques sans pénétration du gaz de pressurisation à l'intérieur de la zone creuse puis dans un deuxième temps la fusion de l'organe fusible et ainsi laisser pénétrer le gaz à l'intérieur de la zone creuse et achever le soudage-diffusion.

Le but général de l'invention est de proposer un procédé de réalisation d'échangeurs de chaleur comportant au moins un circuit de fluide avec au moins un canal de circulation de fluide, au moins une cellule contenant un matériau MCP de type métal ou sel, dans lequel chaque canal est adjacent à au moins une cellule et qui permette d'obtenir des dimensions et formes de cellules adaptables à souhait, typiquement entre 2 et 250 mm et ce, afin d'obtenir une grande capacité de stockage volumique et une vitesse de chauffage thermique, le cas échéant par restitution, élévée.

### Exposé de l'invention

Pour ce faire, l'invention a pour objet, selon une première alternative, un procédé de réalisation d'un module d'échangeur de chaleur comportant au moins un circuit de fluide de forme allongée selon un axe X et comportant au moins un canal de circulation de fluide, au moins une cellule contenant un matériau à changement de phase (MCP), dans lequel chaque canal est adjacent à au moins une cellule.

Selon cette première alternative de l'invention, le procédé comporte les étapes suivantes:
a/ usinage d'au moins une rainure dans une plaque métallique, la rainure étant débouchante à au moins une de ses extrémités ;
b/ positionnement d'une autre plaque métallique contre la plaque usinée de sorte à ce qu'au moins une rainure de la plaque usinée délimite une partie d'une cellule;
c/ assemblage des plaques métalliques entre elles, soit par compression isostatique à chaud (CIC), soit par compression uniaxiale à chaud (CUC) de sorte à obtenir un soudage par diffusion entre les plaques métalliques, soit par brasage, au moins une rainure de la plaque usinée et assemblée à l'autre plaque délimitant une cellule débouchante à au moins une de ses extrémités ;
d/ remplissage de chaque cellule par un matériau à changement de phase (MCP) de type sel ou alliage métallique, soit par coulée du matériau MCP à l'état liquide soit par insertion du matériau MCP à l'état solide ;
e/ positionnement d'une autre plaque métallique, dite plaque de fermeture, contre les plaques déjà assemblées de sorte à fermer chaque extrémité débouchante de chaque cellule remplie de matériau MCP ;
f/ assemblage de la plaque de fermeture avec les plaques déjà assemblées soit par soudage soit par brasage.

L'invention a également pour objet selon une deuxième alternative un procédé de réalisation d'un module d'échangeur de chaleur comportant au moins un circuit de fluide et comportant au moins un canal de circulation de fluide, au moins une cellule contenant un matériau à changement de phase (MCP), dans lequel chaque canal est adjacent à au moins une cellule.

Selon cette deuxième alternative de l'invention, le procédé comporte les étapes suivantes:
a1/ usinage d'au moins une rainure dans une plaque métallique;
b1/ remplissage d'au moins un conteneur par un matériau à changement de phase (MCP) de type sel ou alliage métallique, soit par coulée du matériau MCP à l'état liquide soit par insertion du matériau MCP à l'état solide ;
b2/ mise sous vide et réalisation de l'étanchéité de(s) conteneur(s) rempli(s) de matériau MCP;
b3/ logement du (des) conteneur(s) dans la(les) rainure(s) ;
b4/ positionnement d'une autre plaque métallique contre la plaque usinée de sorte à ce qu'au moins une rainure de la plaque usinée délimite une partie d'une cellule contenant le(s) conteneur(s) rempli(s) de matériau MCP;
c1/ assemblage des plaques métalliques entre elles et avec le(s) conteneur(s), soit par compression isostatique à chaud (CIC), soit par compression uniaxiale à chaud (CUC) de sorte à obtenir un soudage par diffusion entre les plaques métalliques et conteneur(s), soit par brasage, au moins une rainure de la plaque usinée et assemblée à l'autre plaque délimitant une cellule contenant le(s) conteneur(s) rempli(s) de matériau MCP.

Autrement dit, le procédé selon cette deuxième alternative consiste d'abord à insérer le matériau à changement de phase (MCP) à l'état solide ou liquide dans un conteneur dont la forme permet son insertion dans les cellules constituées par l'assemblage des plaques, puis à mettre sous vide et rendre étanche ce conteneur. Ici, les étapes d/, e/, f/ selon la première alternative ne sont plus nécessaires.

Plusieurs conteneurs peuvent être utilisés et juxtaposés dans l'assemblage.

Cette deuxième alternative est avantageuse car le remplissage du matériau MCP peut être fait plus commodément dans des cellules unitaires que dans un module échangeur complet, et le soudage par diffusion du conteneur avec l'échangeur garantit une meilleure tenue mécanique qu'un assemblage direct par fusion. La fusion du MCP lors de l'étape c1/ de CIC n'est pas gênante car celui-ci reste confiné dans son conteneur.

Il va de soi que lorsqu'un module échangeur obtenu selon l'invention comporte une face externe destinée à être soumis à un flux de chaleur provenant du milieu environnant, les températures de flux ne peuvent dégrader le soudage, le soudage-diffusion ou le brasage. Autrement dit, on veille à ce que les températures d'utilisation de ces modules d'échangeur restent en deçà des températures de fusion des matériaux de bases de l'échangeur et des matériaux utilisés pour les soudures et brasures éventuelles.

L'assemblage par soudage-diffusion ou par brasage selon l'invention permet d'envisager toutes sortes de géométries pour les canaux fluides ainsi que pour les cellules de confinement de matériau MCP et d'inclure dès la phase d'usinage de la (des) rainure(s) les évents, les embouts de remplissage et communications entre cellules de MCP nécessaires au remplissage des cellules. Selon l'invention, tout type de forme peut être obtenu pour le(s) circuit(s) de fluide: droite, coudée, en zig-zag.

Le procédé de fabrication selon l'invention se distingue clairement des procédés de fabrication d'échangeurs thermiques intégrant un matériau MCP selon l'état de l'art, en particulier du brevet DE102010004358, en ce qu'il permet de conformer les cellules de MCP selon n'importe quelle géométrie afin de favoriser les mélanges de réactif et les échanges thermiques et n'importe quelle dimension à l'échelle millimétrique ou centimétrique, tout en étant simple de mise en oeuvre et à un moindre coût.

Les inventeurs ont pensé à appliquer la technique de fabrication des échangeurs à plaques déjà éprouvée et qui consiste en un assemblage par soudage diffusion ou par brasage pour réaliser des cellules de confinement d'un matériau MCP. De manière surprenante, bien que simple à mettre en oeuvre, personne n'avait pensé à le faire jusqu'à présent. En effet, l'assemblage par soudage-diffusion est jusqu'à ce jour utilisé pour réaliser des pièces de grande compacité. Or, appliquer cette technique de fabrication permet d'atteindre une porosité, c'est-à-dire un rapport entre le volume de circulation de fluides et le volume total de la matière, très importante, typiquement jusqu'à 80%. On peut donc obtenir un volume important de confinement de matériau à changement de phase dans l'échangeur et donc obtenir de bonnes performances thermiques et une bonne compacité. En particulier, il est possible dans le cadre de l'invention d'utiliser un insert fusible pour éviter la déformation des cellules durant l'étape c/ de CIC, ce qui permet d'obtenir des cellules contenant un MCP de volume important et donc est très favorable lorsque le MCP est bon conducteur thermique (cas d'un matériau métallique).

Les dimensions caractéristiques des cellules seront adaptées à la puissance thermique à échanger, à la capacité de stockage nécessaire et aux propriétés mécaniques et thermiques des matériaux, elles peuvent aller typiquement de 2 mm à 250 mm.

Grâce au procédé selon l'invention, on obtient en d'autres termes un échangeur de chaleur à au moins un circuit de fluides et qui intègre un matériau à changement de phase MCP, de résistance mécanique élevée, de capacité de stockage thermique élevée et qui permet un chauffage rapide d'un fluide caloporteur circulant dans le circuit soit directement par le flux thermique sur la face qui est dédiée soit indirectement par restitution de la chaleur stockée par le matériau MCP dans les cellules.

Selon une variante préférée, on réalise les étapes a/ à f/ ou a1/ à c1/ de sorte à créer un ensemble de canaux fluides définissant deux circuits distincts et un ensemble de cellules contenant un matériau MCP.

Selon une variante de réalisation, la paroi d'une des plaques métalliques assemblées selon l'étape c/ ou c1/ constitue une partie d'un canal d'un circuit de fluides de l'échangeur.

Selon une variante de réalisation, on réalise l'étape a/ ou a1/ de sorte à obtenir au moins une rainure débouchante sur ses deux extrémités, les étapes b/ et c/ ou b4/ et c1/ permettant d'obtenir au moins une rainure de la plaque usinée et assemblée à l'autre plaque délimitant un canal de circulation de fluide débouchant à ses deux extrémités, les étapes d/ à f/ n'étant pas réalisées, de sorte à laisser débouchant le canal de circulation de fluides à ses deux extrémités, ledit canal constituant un canal d'un circuit de fluides de l'échangeur.

Selon une variante de réalisation avantageuse, l'autre plaque métallique positionnée et assemblée selon l'étape b/ et c/ ou b4/ et c1/ est également usinée d'au moins une rainure débouchante à au moins une de ses extrémités et constituant une partie d'une cellule.

De préférence, on réalise les étapes a/ à f/ ou a1/ à c1/ de sorte à créer un ensemble de canaux fluides définissant deux circuits distincts et un ensemble de cellules contenant un matériau MCP.

Au préalable de l'étape c/ ou c1/ par compression isostatique à chaud (CIC), on peut insérer avantageusement un tube préformé dans chaque rainure, le tube constituant une partie d'une cellule de confinement du matériau MCP ou une partie d'un canal d'un circuit de fluide de l'échangeur. On peut ainsi réaliser la CIC à haute pression de manière fiable.

Au préalable de l'étape c/ou c1/ par compression isostatique à chaud (CIC), on peut également insérer avantageusement un élément fusible dans chaque rainure. On évite à tout le moins on limite les déformations susceptibles d'être générées durant la CIC. L'élément fusible est soit dissous chimiquement soit évacué par fusion.

De préférence, les plaques métalliques sont en acier au carbone, en acier inoxydable, ou en alliage à base de nickel ou de titane, l'étape c/ ou c1/ étant réalisée par compression (CIC) ou par compression (CUC) et l'étape f/ étant réalisée par soudage.

Selon une variante de réalisation préférée, la(les) cellule(s) et le cas échéant le(s) canal(ux) de circulation de fluides sont constitués par des rainures usinées dans un matériau céramique, tel que graphite, carbure de silicium (SiC), nitrure de silicium (Si₃N₄) ou en matériau nano-laméllaire (phase MAX), les étapes c/ ou c1/ et f/ étant réalisées par brasage.

Lorsqu'on souhaite réaliser un module échangeur de chaleur destinée à être en contact avec un flux de chaleur provenant d'un milieu environnant, préalablement à l'étape c/ ou c1/, on positionne au moins une plaque métallique plane, contre la face non usinée d'une plaque métallique à rainure(s), la face de l'autre plaque métallique plane opposée à celle positionnée contre une plaque à rainure(s) constituant la face externe du module d'échangeur.
L'invention concerne également sous un autre de ses aspects, un module d'échangeur de chaleur comportant au moins un circuit de fluide comportant au moins un canal de circulation de fluide, au moins une cellule contenant un matériau à changement de phase (MCP) de type sel ou alliage métallique, au moins la(les) cellule(s) étant délimitée(s) par des parois d'au moins une première plaque métallique soit soudée, soit soudée par diffusion, soit brasée à au moins une deuxième plaque métalliques, et comportant soit une plaque de fermeture soudée à l'une et/ou l'autre des première et deuxième plaques métalliques, et fermant chaque extrémité débouchante de chaque cellule remplie de matériau MCP, soit un (des) conteneur(s) rempli(s) de matériau MCP contenu dans la au moins une cellule.

Selon un mode de réalisation avantageux, le module comporte au moins une face externe destinée à être en contact avec un flux de chaleur.

Selon une caractéristique, le circuit est de forme allongée selon un axe X et la(les) cellule(s) est (sont) de forme allongée selon un axe X1.

Avantageusement, chaque cellule présente une largeur ou une hauteur, mesurée transversalement à l'axe X, comprise entre 2 mm et 250 mm.

Selon une variante de réalisation, la(les) cellule(s) est (sont) agencée(s) de sorte leur axe X1 soit sensiblement orthogonal à l'axe X du (des) canal (ux) de circulation de fluide.

L'invention concerne enfin l'utilisation d'un module d'échangeur de chaleur décrit ci-dessus, dans laquelle les échanges thermiques entre le flux de chaleur provenant du milieu environnant se font aux hautes températures.

Les applications visées par un échangeur selon l'invention sont nombreuses et concernent les procédés dans lesquels les échanges thermiques se font à hautes températures. Par « hautes températures », on entend au sens de l'invention, des températures au-dessus de 200°C, de préférence comprises entre 400 et 800°C. Une utilisation avantageuse d'un module échangeur selon l'invention est pour stocker la chaleur en vue de son utilisation différée.

Une autre utilisation avantageuse est pour lisser les fluctuations de température du circuit de fluides.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en éclaté de différents composants d'un échangeur de chaleur et du conteneur étanche utilisé lors d'un procédé de fabrication par compression CIC selon l'état de l'art ;
- la figure 2 est une vue schématique en éclaté de différents composants d'un échangeur de chaleur et du conteneur étanche utilisé lors d'un procédé de fabrication par compression CIC selon une variante de la figure 1;
- la figure 3 est une vue schématique en coupe transversale d'un module d'échangeur de chaleur intégrant un matériau à changement de phase MCP selon l'invention ;
- la figure 4 est une vue schématique en éclaté de différents composants d'un module d'échangeur selon la figure 3 ;
- les figures 5A à 5D illustrent en vue de coupe longitudinale différentes étapes de remplissage des cellules d'un module d'échangeur selon l'invention par un matériau MCP ;
- la figure 6 est une vue en perspective d'un module d'échangeur de chaleur intégrant un matériau à changement de phase MCP selon l'invention, sur lequel une simulation numérique de comportement thermique a été effectuée;
- les figures 7 à 9 sont des courbes illustrant le comportement thermique du module d'échangeur de chaleur selon la figure 6 ;
- les figures 10A et 10B illustrent une variante de réalisation d'un module échangeur selon laquelle les canaux de circulation et les cellules contenant un matériau MCP sont orientés à 90° les uns par rapport aux autres ;
- les figures 11 à 14 illustrent encore d'autres variantes de réalisation d'un module échangeur;
- les figures 15A et 15B illustrent une variante de réalisation et d'utilisation d'un module échangeur en tant que paroi de séparation de deux fluides ;
- la figure 16 illustre une variante de réalisation d'un module d'échangeur à deux circuits de circulation de fluide ;
- les figures 17A et 17B illustrent deux variantes distinctes de réalisation d'un module échangeur de chaleur à deux circuits de fluides, en tant que réacteur-échangeur d'une réaction chimique.

Par souci de clarté, les mêmes références désignant les mêmes éléments d'un échangeur de chaleur selon l'état de l'art et d'un module d'échangeur de chaleur intégrant un matériau MCP selon l'invention sont utilisées pour toutes les figures 1 à 17B

On précise que les différents éléments en particulier les cellules de confinement du matériau MCP et des canaux de circulation de fluide selon l'invention sont représentés uniquement par souci de clarté et qu'ils ne sont pas à l'échelle.

Les figures 1 et 2 relatives à la réalisation d'un échangeur de chaleur à plaques selon l'état de l'art ont déjà été commentées en préambule. Elles ne sont pas décrites ici en détail.

Un module d'échangeur de chaleur 1 intégrant un matériau à MCP selon l'invention dont les plaques 10.1, 10.2, 10.3, 12.1, 12.1 sont soudées par compression isostatique à chaud CIC est montré en figure 3. Il comporte une rangée de cellules 15 de confinement de matériau MCP, chacune des cellules 15 étant au-dessus et en regard d'un canal 13 de circulation d'un fluide caloporteur. Les canaux 13 forment également une rangée de canaux. L'échangeur 1 comporte en outre une face 12.1 agencée au-dessus de la rangée de cellules 15 intégrant un matériau MCP, cette face 12.1 étant destinée à recevoir un flux thermique à hautes températures.

Pour obtenir ce module d'échangeur de chaleur selon l'invention, on a réalisé les étapes suivantes.
Etape a/ : on réalise l'usinage de rainures identiques dans trois plaques métallique 10.1, 10.2, 10.3 de forme allongée. Les rainures destinées à constituer les cellules de confinement 15 sont débouchantes à une seule de leurs extrémités, tandis que celles destinées à constituer les canaux 13 de circulation de fluide sont débouchantes à leurs deux extrémités. Comme illustrée sur la figure 4, les rainures peuvent être toutes identiques et par exemple de section rectangulaire.
Etape b/ : on positionne la plaque métallique usinée 10.2 contre la plaque usinée 10.1 avec leurs rainures en regard individuellement de sorte à ce qu'elle délimite chacune une partie d'un canal 13 de circulation de fluide. On réalise de même le positionnement de la plaque métallique usinée 10.3 contre la plaque 10.1 de sorte à ce que chaque rainure de la plaque usinée 10.3 délimite une partie d'une cellule de confinement d'un matériau MCP (figure 4). On réalise enfin le positionnement d'une plaque métallique 12.1 pleine contre la plaque 10.3, cette plaque pleine 12.1 définissant la face de l'échangeur à exposer à un flux thermique à hautes températures. On en fait de même avec une plaque métallique 12.2 contre la plaque 10.2.
Etape c/ : on réalise l'assemblage des plaques métalliques 10.1, 10.2, 10.3, 12.1, 12.2 entre elles par l'application d'un cycle de compression isostatique à chaud (CIC). Le cycle de CIC appliqué est avantageusement réalisé à une température élevée, typiquement à 1000°C et à pression élevée, typiquement à 1000 bar, pendant une durée d'une à deux heures. On obtient ainsi un soudage par diffusion entre les plaques métalliques, en particulier autour des bords des rainures 13, 15.
Etape d/: on remplit alors chaque cellule 15 par un matériau à changement de phase (MCP) de type sel ou alliage métallique.

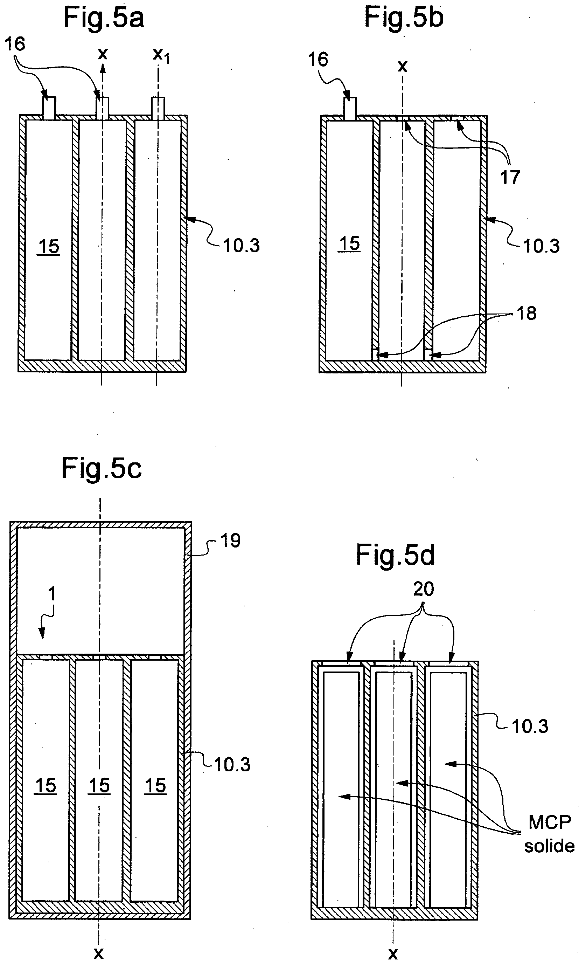

Le remplissage peut se faire soit par coulée du matériau MCP à l'état liquide (figures 5A, 5B, 5C) soit par insertion du matériau MCP à l'état solide (figure 5D).

Ainsi, pour le remplissage des cellules 15 par le matériau MCP à l'état liquide, on peut réaliser uniquement une coulée par gravité du MCP chauffé préalablement au-delà de sa température de liquidus. L'air présent initialement dans les cellules 15 s'échappe alors soit par le canal 16 de remplissage proprement dit (figure 5A) soit par un évent 17 ménagé à cet effet à une extrémité des cellules 15 (figure 5B). Pour limiter les problèmes d'oxydation, la coulée du matériau MCP à l'état liquide se fait préférentiellement sous une atmosphère protectrice ou sous vide. Comme illustre en figure 5B, on peut prévoir une communication entre cellules 15 par des canaux 18 prévus à cet effet dès l'étape d'usinage a/ des rainures.

Selon une variante préférée, on place initialement le module échangeur de chaleur obtenu selon l'étape c/ et le matériau MCP à l'état solide dans un conteneur étanche 19 (figure 5C). L'ensemble est alors dégazé afin de réduire la teneur en oxygène. Le chauffage de l'ensemble au-delà de la température de liquidus du matériau MCP permet son écoulement du MCP dans les cellules 15 (figure 5C).

Selon une autre variante, le remplissage des cellules est réalisé par l'insertion de cylindres ou de parallélépipèdes de MCP à l'état solide dans les cellules 15 au travers de passages 20 prévus à cet effet (figure 5D). On s'assure bien évidemment que le volume unitaire d'un cylindre ou parallélépipède de matériau MCP solide est inférieur au volume unitaire d'une cellule 15 afin d'autoriser l'expansion du MCP lors de sa fusion.
Etape e/ : on positionne alors au moins une autre plaque métallique, dite plaque de fermeture, contre les plaques déjà assemblées de sorte à fermer chaque extrémité débouchante de chaque cellule 15 remplie de matériau MCP.
Etape f/ : on assemble enfin la(les) plaque(s) de fermeture avec les plaques déjà assemblées soit par soudage soit par brasage.

Pour valider l'application possible d'un module échangeur de chaleur intégrant un matériau MCP qui vient d'être décrit à des procédés fonctionnant aux hautes températures, on a réalisé une simulation numérique du comportement thermique.

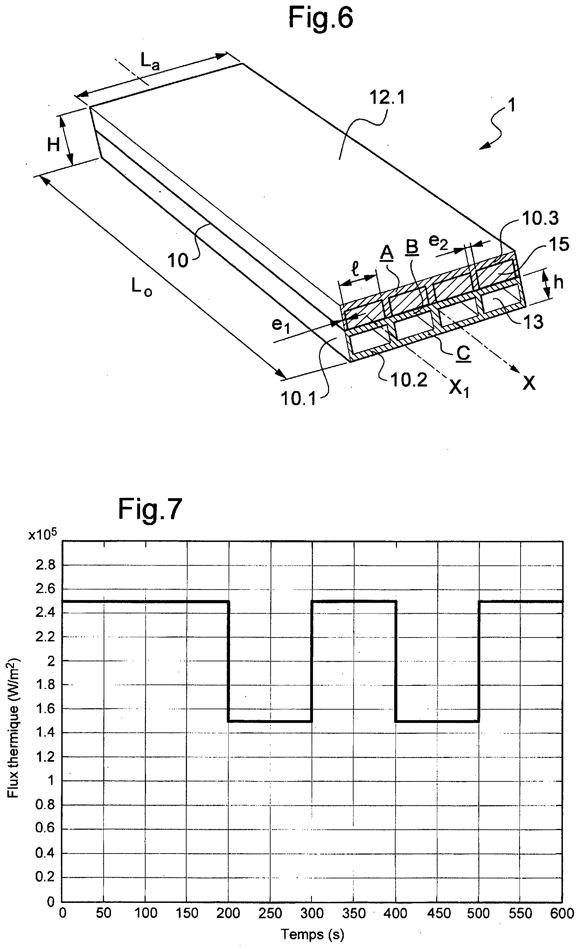

Le module échangeur 1 qui a fait l'objet de la simulation est représenté schématiquement en figure 6 : il est constitué de plaques 10.1, 10.2, 10.3 d'alliage à base de nickel, type inconel 600 usinées de façon à former une rangée de quatre canaux 13 de circulation de fluide en regard d'une rangée de quatre cellules 15 contenant un matériau MCP. Chaque canal 13 est de formes et de dimensions identiques à chaque cellule 15. Un canal 13 a une hauteur h de 5 mm et une largeur 1 de 10 mm. La longueur totale Lo du module d'échangeur est de 180 mm, sa hauteur H est de 16 mm et sa largeur La de 48 mm. Les parois latérales 10 ont une épaisseur e1 de 1 mm, les autres parois 10 ont une épaisseur e2 de 2 mm. Dans l'exemple de simulation, tous les canaux 13 et les cellules 15 sont allongées selon un axe respectivement X1, X2 parallèle à l'axe longitudinal de l'échangeur 1.

Ainsi, les dimensions retenues pour les différentes parties de l'échangeur conduisent à une porosité (volume fluide/volume total) de 26% et une fraction volumique de MCP (volume MCP/volume total) de 26%.

L'échangeur est soumis à un flux thermique de manière cyclique sur sa face supérieure 12.1 et est refroidi par un fluide circulant dans les canaux 13 à la température de 300°C.

La température d'entrée du fluide, c'est-à-dire à l'entrée des canaux 13, est supposée constante dans le temps. L'échange thermique entre les parois des canaux 13 et le fluide est modélisé par un coefficient d'échange constant de 500 W/m²/K.

On a résumé dans le tableau ci-après, les propriétés thermiques des matériaux des plaques et du MCP utilisées pour la simulation numérique. Les propriétés physiques du matériau MCP utilisé sont celles d'un alliage d'aluminium-silicium (AISi). Il va de soi que l'alliage AISi n'est cité qu'à titre illustratif.

**TABLEAU**

| **Matériau** | **Conductivité thermique (W/m/K)** | **Masse volumique (kg/m3)** | **Capacité calorifique (J/kg/K)** | **Température de fusion (°C)** | **Chaleur latente de fusion (KJ/kg)** |
|---|---|---|---|---|---|
| Inconel | 15 | 7800 | 500 | N/A | N/A |
| MCP | 160 | 2700 | 1400 | 576 | 560 |
| Cuivre | 400 | 8700 | 385 | N/A | N/A |

La simulation est menée pendant une durée 600 secondes en faisant varier le flux thermique appliqué sur la face supérieure 12.1 de 250 KW/m² à 150 KW/m², comme cela est symbolisé par le graphe de la figure 7.

On constate en réponse à l'application de ce flux thermique cyclique, la variation dans le temps de la température de sortie du fluide des canaux 13.

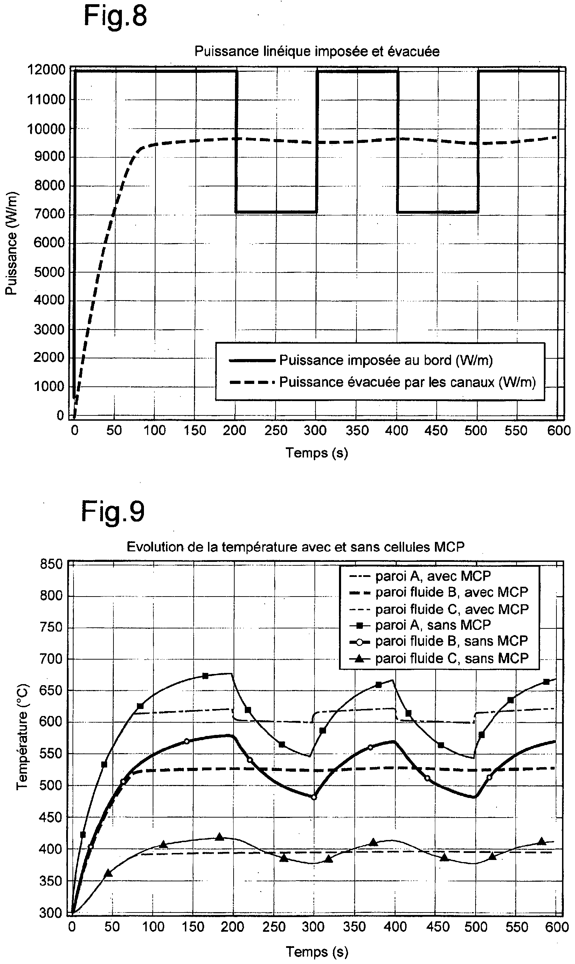

Lors du démarrage du transitoire, le flux appliqué est de 250 kW/m², ce qui conduit à la fusion du MCP à partir d'un temps de 70 s environ (figure 8).

Lors des cycles successifs, le changement de phase du matériau MCP permet de lisser les variations de températures dans l'échangeur et conduit à un flux thermique échangé avec le fluide quasiment constant, comme illustré par la courbe avec croix sur la figure 8.

On a illustré en figure 9, sous forme de courbes, l'évolution des températures des différentes parois A, B, C avec ou sans matériaux MCP selon l'invention au cours des cycles: il ressort clairement de cette figure 9, que le matériau MCP dans les cellules 15 conduit également à une température de paroi A, B, C des canaux 13, 15 quasiment constante. On précise que sur cette figure 9, les cellules 15 ne comportant pas de matériau MCP, comportent du cuivre en lieu et place.

Ainsi, l'énergie absorbée ou libérée par le changement de phase du matériau, égale à 300 kJ/m soit 54,4 kJ, compense la variation de puissance incidente, égale à 240 kJ/m soit 43,2 kJ, à chaque cycle et la conductivité thermique élevée du matériau MCP, égale à 160 W/m/K, permet de mobiliser rapidement l'ensemble du matériau.

Comme visible sur cette figure 9, les variations de température en paroi externe A, qui sont de l'ordre de 125°C dans le cas de l'échangeur sans MCP sont limitées à environ 20°C dans le cas de l'échangeur selon l'invention intégrant le matériau MCP. Les variations de la température à l'intérieur d'un canal 13 de circulation de fluide, sont quant à elles de 100°C pour des cellules 15 à cuivre, alors qu'elles sont de moins de 5°C pour des cellules 15 remplies de matériau MCP.

En d'autres termes, on peut en conclure en s'appuyant sur cette simulation. numérique, qu'un module échangeur selon l'invention intégrant un matériau MCP dans ses cellules 15, présente la capacité de lisser les fluctuations de température du fluide en sortie des canaux 13 de l'échangeur et ainsi de fournir aux composants d'un système situés en aval de l'échangeur des conditions de fonctionnement stables. Un tel lissage permet de limiter les problèmes de fatigue thermique sur l'échangeur lui-même et sur les composants d'un système, en aval de l'échangeur. Autrement dit, grâce à l'invention on peut augmenter la durée de vie d'un module échangeur à circulation de fluides ainsi que celle de composants d'un composant en aval.

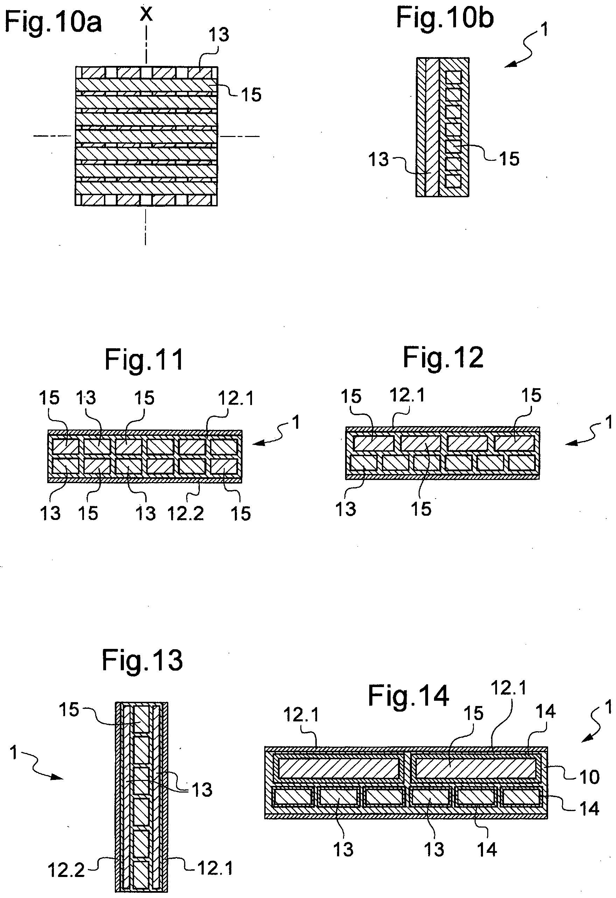

Dans l'exemple de simulation qui vient d'être décrit, les canaux 13 et les cellules 15 contenant le MCP sont parallèles. A titre de variante alternative, on peut réaliser les canaux 13 de circulation de fluide 13 et les cellules 15 contenant le matériau MCP perpendiculairement. Une telle variante alternative est illustrée en figures 10A et 10B sur lesquelles les axes X1 des cellules sont à 90° de l'axe X longitudinal de l'échangeur selon lequel les canaux 13 sont réalisés. Une telle variante est avantageuse car elle permet d'améliorer encore la tenue mécanique de l'échangeur aux sollicitations induites par les changements de volume du matériau MCP lors de sa fusion/solidification.

Selon une variante de réalisation, on peut prévoir d'agencer les cellules 15 contenant les MCP en quinconce par rapport aux canaux 13 de circulation des fluides afin d'améliorer encore les échanges thermiques entre fluide et matériau MCP (figure 11).

Selon une variante de réalisation, lors de l'étape b/ on peut insérer des tubes 14 métalliques préformés de section carrée ou rectangulaire individuellement dans les rainures pour les canaux 13 et les cellules 15 (figures 12 à 14). On réalise alors une étape c/ de compression isostatique à chaud CIC en appliquant la pression aussi à l'intérieur des tubes. D'ailleurs seules les cellules 15 peuvent être constituées des tubes, les canaux 13 étant alors constitués par les rainures, et vice-versa. Sur la variante illustrée en figure 13, on voit d'ailleurs qu'il est possible de réaliser des canaux 13 de fluide de part et d'autre d'une rangée de cellules 15, les canaux 13 étant à proximité de chaque face 12.1, 12.2 de l'échangeur en contact avec le milieu environnant.

Pour délimiter les cellules 15 ou canaux 13, on peut implanter dans les rainures lors de l'étape b/, des inserts dont la fonction est d'empêcher toute déformation importante des canaux ou cellules lors du cycle de compression isostatique à chaud. Les inserts seront alors supprimés une fois l'assemblage obtenu, soit par fusion dans le cas d'un matériau à point de fusion inférieure à la température de soudage, soit par attaque acide.

Dans le cas où l'on choisit un matériau MCP à conductivité thermique élevée, par exemple lorsqu'il s'agit d'un métal, il peut être avantageux de réduire les dimensions des cellules 15 et d'augmenter leur nombre. La présence de parois de matériau de structure autour de cellules 15 de plus petites dimensions confère à l'échangeur une meilleure tenue mécanique aux sollicitations induites par les changements de volume du matériau MCP lors de sa fusion/solidification.

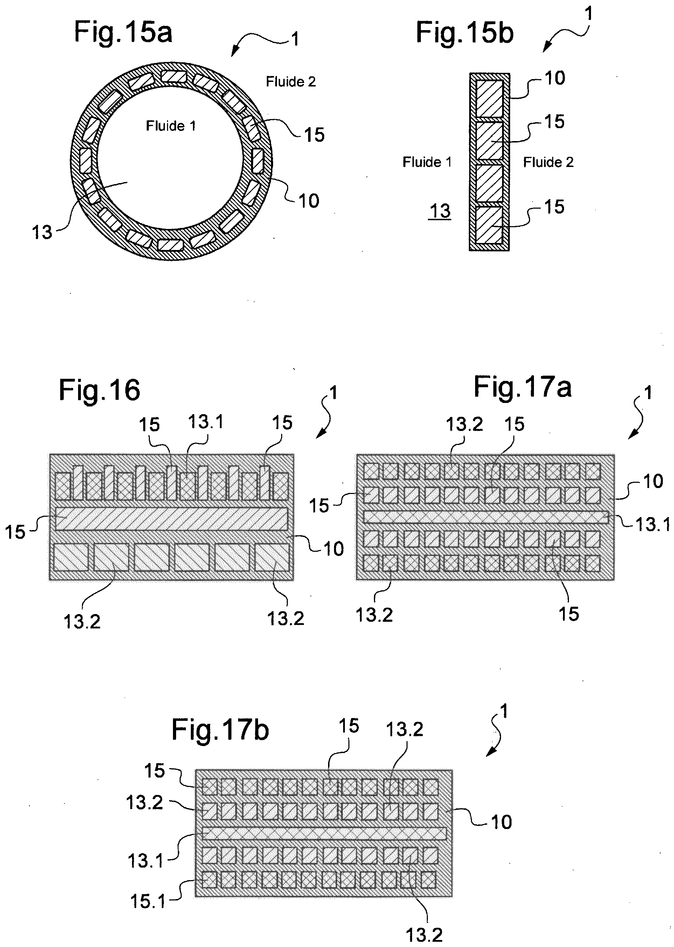

Une variante peut consister à utiliser un module échangeur 1 selon l'invention en tant que paroi 10 de séparation de deux fluides à températures différents afin de lisser les variations de températures d'un système. La forme de la paroi 10 peut être adaptée à l'application et peut être notamment cylindrique (figure 15A) ou plane (figure 15B) ou selon toute autre forme. Une telle utilisation en tant que paroi 10 de séparation peut être par exemple pour un système de combustion d'un combustible fossile ou de biomasse ou pour un système industriel émettant un gaz chaud de façon cyclique.

Un module d'échangeur de chaleur 1 selon l'invention peut être réalisé pour comporter deux circuits de circulation de fluides distincts, 13.1, 13.2 afin de lisser les variations de température de l'un des fluides (figure 16).

Un module échangeur de chaleur peut constituer un réacteur-échangeur comportant un circuit de circulation de fluide de réactants dans un canal unique 13.1 et un circuit de circulation de fluide utilité dans deux rangées de canaux 13.2 de part et d'autre du canal 13.1 (figures 17A et 17B). Les cellules 15 de confinement du matériau MCP peuvent être insérées entre les canaux 13.1 et 13.2 (figure 17A) ou à l'extérieur des canaux 13.2 de circulation du fluide utilisé (figure 17B). Dans ces cas, le matériau MCP permet de réduire significativement la vitesse de montée en température du réacteur-échangeur et facilite l'intervention d'un opérateur et/ou la réponse d'un automate de commande.

L'invention peut être appliquée sous l'une des formes décrites au stockage de la chaleur ou au lissage des fluctuations de températures afin de garantir la sécurité ou d'augmenter la durée de vie des composants d'un système et du module d'échangeur de chaleur en lui-même. On peut citer les composants suivants dont le lissage des fluctuations des températures est particulièrement avantageux: turbines, moteurs de type Stirling, échangeurs,....

De même, on peut citer une liste non exhaustive d'applications possibles d'un module échangeur selon l'invention:
- stockage de la chaleur produite par un récepteur solaire dans la journée pour une utilisation dans la soirée ou dans la nuit ;
- récupération de la chaleur perdue de manière cyclique par un procédé industriel (fonderie, aciérie) pour alimenter un autre procédé ;
- réduction de la chute de température du fluide caloporteur dans une centrale solaire à concentration lors de variations d'ensoleillement (passage de nuages) ;
- protection des composants d'un système micro-électronique ;
- limitation des excursions thermiques dans le cas de réactions exothermiques ou endothermiques au sein d'un réacteur échangeur ;
- stabilisation de la température dans des cellules électrochimiques (batteries électriques, cellules d'électrolyse de vapeur d'eau à haute température EVHT).
- amortissement des oscillations de températures des gaz dans une unité de combustion de combustible fossile ou de biomasse.

L'invention n'est pas limitée aux exemples qui viennent d'être décrits ; on peut notamment combiner entre elles des caractéristiques des exemples illustrés au sein de variantes non illustrées.

### REFERENCES CITEES

[1]: Maruoka N., Sato K., Yagi J, Akiyama T. "Development of PCM for Recovering High Temperature Waste Heat and Utilization for Producing Hydrogen by Reforming Reaction of Methane" ISIJ International, Vol. 42 (2002), No. 2, pp. 215-219.
[2]: Nomura T. "Technology of Latent Heat Storage for High Temperature Application: A Review" I S I J International, Vol. 50 (2010), No 9, pp.1229-1239.
[3]: Kenisarin M. "High-temperature phase change materials for thermal energy storage", Renewable and Sustainable Energy Reviews, 14 (2010) pp. 955-970.
[4]: Farid M.M. et al. "A review on phase change energy storage: materials and applications" Energy Conversion and Management 45 (2004) pp.1597-1615.
[5]: Liwu Fan, J.M.Khodadadi "Thermal conductivity enhancement of phase change materials for thermal energy storage : A review" Renewable and Sustainable Energy Reviews, 15 (2011) pp.24-46.
[6]: Birchenall C. Ernest, Riechman Alan F. "Heat storage in Eutectic Alloys" Metallurgical Transactions, Vol. 11A (1980), pp. 1415-1420.
[7]: Farkas D., Birchenall C. E. "New Eutectic Allots and Their Heats of Transformation" Metallurgical Transactions Vol 15A (1985), pp 323-327.
[8]: N. Sharifi, Th. L. Bergman, A.Faghri "Enhancement of PCM melting in enclosures with horizontally-finned internal surfaces" International Journal of Heat and Mass Transfer 54 (2011) pp.4182-4192.
[9]: Bo M.L. et al. "Research of Steam Boiler Using High Temperature Heat Pipe Based on Metal Phase Change Material" 2011 International Conference on Computer Distributed Control and Intelligent Environmental Monitoring.
[10]: Guansheng C., Renyuan Z., Feng L., Shidong L., Li Z. "Numerical Simulation and Experimental Research of Heat Charging Process of Cylindrical Units with PCM of Al-Si Alloy. 2011" International Conference on Engineering Materials, Energy, Management and Control, MEMC 2011.

## Revendications

1. Procédé de réalisation d'un module d'échangeur de chaleur (1) comportant au moins un circuit de fluide (13, 13.1, 13.2) et comportant au moins un canal (13) de circulation de fluide, au moins une cellule (15) contenant un matériau à changement de phase (MCP), dans lequel chaque canal est adjacent à au moins une cellule, le procédé comportant les étapes suivantes:
a/ usinage d'au moins une rainure dans une plaque métallique (10.1, 10.2, 10.3), la rainure étant débouchante à au moins une de ses extrémités ;
b/ positionnement d'une autre plaque métallique (10.1, 10.2, 10.3) contre la plaque usinée de sorte à ce qu'au moins une rainure de la plaque usinée délimite une partie d'une cellule;
c/ assemblage des plaques métalliques entre elles, soit par compression isostatique à chaud (CIC), soit par compression uniaxiale à chaud (CUC) de sorte à obtenir un soudage par diffusion entre les plaques métalliques, soit par brasage, au moins une rainure de la plaque usinée et assemblée à l'autre plaque délimitant une cellule débouchante à au moins une de ses extrémités ;
d/ remplissage de chaque cellule par un matériau à changement de phase (MCP) de type sel ou alliage métallique, soit par coulée du matériau MCP à l'état liquide soit par insertion du matériau MCP à l'état solide ;
e/ positionnement d'une autre plaque métallique, dite plaque de fermeture, contre les plaques déjà assemblées de sorte à fermer chaque extrémité débouchante de chaque cellule remplie de matériau MCP ;
f/ assemblage de la plaque de fermeture avec les plaques déjà assemblées soit par soudage soit par brasage.

2. Procédé de réalisation d'un module d'échangeur de chaleur (1) comportant au moins un circuit de fluide (13, 13.1, 13.2) et comportant au moins un canal (13) de circulation de fluide, au moins une cellule (15) contenant un matériau à changement de phase (MCP), dans lequel chaque canal est adjacent à au moins une cellule, le procédé comportant les étapes suivantes:
a1/ usinage d'au moins une rainure dans une plaque métallique (10.1, 10.2, 10.3);
b1/ remplissage d'au moins un conteneur par un matériau à changement de phase (MCP) de type sel ou alliage métallique, soit par coulée du matériau MCP à l'état liquide soit par insertion du matériau MCP à l'état solide ;
b2/ mise sous vide et réalisation de l'étanchéité de(s) conteneur(s) rempli(s) de matériau MCP;
b3/ logement du (des) conteneur(s) dans la(les) rainure(s) ;
b4/ positionnement d'une autre plaque métallique (10.1, 10.2, 10.3) contre la plaque usinée de sorte à ce qu'au moins une rainure de la plaque usinée délimite une partie d'une cellule contenant le(s) conteneur(s) rempli(s) de matériau MCP;
c1/ assemblage des plaques métalliques entre elles et avec le(s) conteneur(s), soit par compression isostatique à chaud (CIC), soit par compression uniaxiale à chaud (CUC) de sorte à obtenir un soudage par diffusion entre les plaques métalliques et conteneur(s), soit par brasage, au moins une rainure de la plaque usinée et assemblée à l'autre plaque délimitant une cellule contenant le(s) conteneur(s) rempli(s) de matériau MCP.

3. Procédé de réalisation d'un module d'échangeur de chaleur selon la revendication 1 ou 2, selon lequel la paroi d'une des plaques métalliques assemblées selon l'étape c/ ou c1/ constitue une partie d'un canal d'un circuit de fluides de l'échangeur.

4. Procédé de réalisation d'un module d'échangeur de chaleur selon l'une des revendications 1 à 3, selon lequel on réalise l'étape a/ ou a1/ de sorte à obtenir au moins une rainure débouchante sur ses deux extrémités, les étapes b/ et c/ ou b4/ et c1/ permettant d'obtenir au moins une rainure de la plaque usinée et assemblée à l'autre plaque délimitant un canal de circulation de fluide débouchant à ses deux extrémités, les étapes d/ à f/ n'étant pas réalisées, de sorte à laisser débouchant le canal de circulation de fluides à ses deux extrémités, ledit canal constituant un canal d'un circuit de fluides de l'échangeur.

5. Procédé de réalisation d'un module d'échangeur de chaleur selon l'une des revendications précédentes, selon lequel l'autre plaque métallique positionnée et assemblée selon l'étape b/ et c/ ou b4/ et c1/ est également usinée d'au moins une rainure débouchante à au moins une de ses extrémités et constituant une partie d'une cellule.

6. Procédé de réalisation d'un module d'échangeur de chaleur selon l'une des revendications précédentes, selon lequel on réalise les étapes a/ à f/ ou a1/ à c1/ de sorte à créer un ensemble de canaux fluides définissant deux circuits distincts et un ensemble de cellules contenant un matériau MCP.

7. Procédé de réalisation d'un module d'échangeur de chaleur selon l'une des revendications précédentes, selon lequel au préalable de l'étape c/ ou c1/ par compression isostatique à chaud (CIC), on insère un tube préformé dans chaque rainure, le tube constituant une partie d'une cellule de confinement du matériau MCP ou une partie d'un canal d'un circuit de fluide de l'échangeur.

8. Procédé de réalisation d'un module d'échangeur de chaleur selon l'une des revendications précédentes, selon lequel au préalable de l'étape c/ou c1/ par compression isostatique à chaud (CIC), on insère un élément fusible dans chaque rainure.

9. Procédé de réalisation d'un module d'échangeur de chaleur selon l'une quelconque des revendications précédentes, selon lequel les plaques métalliques sont en acier au carbone, en acier inoxydable, ou en alliage à base de nickel ou de titane, l'étape c/ ou c1/ étant réalisée par compression (CIC) ou par compression (CUC) et l'étape f/ étant réalisée par soudage.

10. Procédé de réalisation d'un module d'échangeur de chaleur selon la revendication 9, selon lequel la(les) cellule(s) et le cas échéant le(s) canal(ux) de circulation de fluides étant constitué(s) par des rainures usinées dans un matériau céramique, tel que graphite, carbure de silicium (SiC), nitrure de silicium (Si₃N₄) ou en matériau nano-laméllaire (phase MAX), les étapes c/ ou c1/ et f/ étant réalisées par brasage.

11. Procédé de réalisation d'un module échangeur de chaleur selon l'une des revendications précédentes, selon lequel préalablement à l'étape c/ ou c1/, on positionne au moins une plaque métallique plane (12.1, 12.2), contre la face non usinée d'une plaque métallique à rainure(s), la face de l'autre plaque métallique plane opposée à celle positionnée contre une plaque à rainure(s) constituant la face externe du module d'échangeur destinée à être en contact avec un flux de chaleur provenant d'un milieu environnant.

12. Module d'échangeur de chaleur (1) comportant au moins un circuit de fluide comportant au moins un canal de circulation de fluide (13, 13.1, 13.2), au moins une cellule contenant un matériau à changement de phase (MCP) de type sel ou alliage métallique, au moins la(les) cellule(s) étant délimitée(s) par des parois (10) d'au moins une première plaque métallique (10.1, 10.2, 10.3) soit soudée, soit soudée par diffusion, soit brasée à une deuxième plaque métalliques (10.1, 10.2, 10.3), et comportant soit une plaque de fermeture soudée à l'une et/ou l'autre des première et deuxième plaques métalliques, et fermant chaque extrémité débouchante de chaque cellule remplie de matériau MCP, soit un (des) conteneur(s) rempli(s) du matériau MCP contenu dans la au moins une cellule.

13. Module d'échangeur de chaleur selon la revendication 12, comportant au moins une face externe (12.1) destinée à être en contact avec un flux de chaleur provenant d'un milieu environnant.

14. Utilisation d'un module d'échangeur de chaleur selon l'une des revendications 12 ou 13, dans laquelle les échanges thermiques entre le flux de chaleur provenant du milieu environnant se font aux hautes températures.

15. Utilisation selon la revendication 14 pour stocker la chaleur en vue de son utilisation différée ou pour lisser les fluctuations de température du circuit de fluides.

## Patentansprüche

1. Verfahren zur Herstellung eines Wärmetauschermoduls (1), das wenigstens einen Fluidkreislauf (13, 13.1, 13.2) aufweist und wenigstens einen Strömungskanal (13) für Fluid und wenigstens eine Zelle (15) aufweist, die ein Latentwärmespeichermaterial (MCP) enthält, wobei jeder Kanal an wenigstens eine Zelle angrenzt, welches Verfahren die folgenden Schritte aufweist:
a) Bearbeiten einer Metallplatte durch Herstellen wenigstens einer Nut in der Metallplatte (10.1, 10.2, 10.3), wobei die Nut an wenigstens einem ihrer Enden offen ist,
b) Anlegen einer anderen Metallplatte (10.1, 10.2, 10.3) an die bearbeitete Platte derart, dass wenigstens eine Nut der bearbeiteten Platte einen Teil einer Zelle begrenzt,
c) Verbinden der Metallplatten miteinander, sei es durch isostatisches Heißressen (CIC) oder durch einachsiges Heißpressen (CUC), um die Platten durch Diffusion miteinander zu verschweißen, oder durch Löten, wobei wenigstens eine Nut der bearbeiteten und mit der anderen Platte verbundenen Platte eine Zelle begrenzt, die an wenigstens einem ihrer Enden offen ist,
d) Füllen jeder Zelle mit einem Latentwärmespeichermaterial (MCP) in der Form eines Salzes oder einer Metalllegierung, sei es durch Eingießen des Latentwärmespeichermaterials MCP im flüssigen Zustand oder durch Eingeben des Latentwärmespeichermaterials MCP im festen Zustand,
e) Anlegen einer weiteren Metallplatte, die als Abschlussplatte bezeichnet wird, an die bereits miteinander verbundenen Platten, um jedes offene Ende jeder mit dem Latentwärmespeichermaterial MCP gefüllten Zelle zu schließen,
f) Verbinden der Abschlussplatte mit den bereits miteinander verbundenen Platten durch Schweißen oder Löten.

2. Verfahren zur Herstellung eines Wärmetauschermoduls (1), das wenigstens einen Fluidkreislauf (13, 13.1, 13.2) aufweist, und das wengistens einen Strömungskanal (13) für Fluid und wenigstens eine Zelle (15) aufweist, die ein Latentwärmespeichermaterial (MCP) enthält, wobei jeder Kanal an wenigstens eine Zelle angrenzt, welches Verfahren die folgenden Schritte aufweist:
a1) Herstellen wenigstens einer Nut in einer Metallplatte (10.1, 10.2, 10.3) durch Bearbeiten dieser Metallplatte,
b1) Füllen wenigstens eines Behälters mit einem Latentwärmespeichermaterial (MCP) in der Form eines Salzes oder einer Metalllegierung, sei es durch Eingießen des Latentwärmespeichermaterials MCP im flüssigen Zustand oder durch Eingeben des Latentwärmespeichermaterials MCP im festem Zustand,
b2) Evakuieren und Abdichten des Behälters oder der Behälter, der oder die mit dem Latentwärmespeichermaterial MCP gefüllt sind,
b3) Einsetzen des Behälters oder der Behälter in die Nut oder die Nuten.
b4) Ansetzen einer anderen Metallplatte (10.1, 10.2, 10.3) an die bearbeitete Platte, derart, dass wenigstens eine Nut der bearbeiteten Platte einen Teil einer Zelle begrenzt, die den oder die mit dem Latentwärmespeichermaterial gefüllten Behälter enthält,
c1) Verbinden der Metallplatten miteinander und mit dem oder den Behältern, sei es durch isostatisches Heißpressen (CIC) oder durch einachsiges Heißpressen (CUC), um die Platten und den oder die Behälter durch Diffusion miteinander zu verschweißen, oder durch Löten, wobei wenigstens eine Nut der bearbeiteten und mit der anderen Platte verbundenen Platte eine Zelle begrenzt die den oder die mit dem Latentwärmespeichermaterial gefüllten Behälter enthält.

3. Verfahren zur Herstellung eines Wärmetauschermoduls nach Anspruch 1 oder 2, bei dem die Wand einer der in Schritt c) oder c1) miteinander verbundenen Metallplatten einen Teil eines Kanals eines Fluidkreislaufs des Wärmetauschers bildet.

4. Verfahren zur Herstellung eines Wärmetauschermoduls nach einem der Ansprüche 1 bis 3, bei dem der Schritt a) oder a1) so ausgeführt wird, dass man wenigstens eine Nut erhält, die an beiden Enden offen ist, die Schritte b) und c) oder b4) und c1) es erlauben, wenigstens eine Nut der bearbeiteten und mit der anderen Platte verbundenen Platte zu erhalten, die einen Strömungskanal für Fluid begrenzt, der an seinen beiden Enden offen ist, und die Schritte d) bis f) nicht ausgeführt werden, um den Strömungskanal für das Fluid an seinen beiden Enden offen zu lassen, wobei dieser Kanal einen Kanal eines Fluidkreislaufs des Wärmetauschers bildet

5. Verfahren zur Herstellung eines Wärmetauschermoduls nach einem der vorstehenden Ansprüche, bei dem die andere der in Schritt b) und c) oder Schritt b4) und c1) miteinander verbundenen Metallplatten ebenfalls durch Bearbeitung mit wenigstens einer Nut versehen wird, die an wenigstens einem ihrer Enden offen ist und einen Teil einer Zelle bildet.

6. Verfahren zur Herstellung eines Wärmetauschermoduls nach einem der vorstehenden Ansprüche, bei dem die Schritte a) bis f) oder a1 bis c1) so ausgeführt werden, dass ein Ensemble von Fluidkanälen gebildet wird, die zwei getrennte Kreisläufe bilden, und ein Ensemble von Zellen gebildet wird, die ein Latentwärmespeichermaterial MCP enthalten.

7. Verfahren zur Herstellung eines Wärmetauschermoduls nach einem der vorstehenden Ansprüche, bei dem vor dem Schritt c) oder c1) durch isostatisches Heißpressen (CIC) ein vorgeformtes Rohr in jede Nut eingesetzt wird, wobei das Rohr einen Teil einer Zelle zum Einschließen des Latentwärmespeichermaterials MCP oder einen Teil eines Kanals des Fluidkeislaufs des Wärmetauschers bildet.

8. Verfahren zur Herstellung eines Wärmetauschermoduls nach einem der vorstehenden Ansprüche, bei dem vor dem Schritt c) oder c1) durch isostatisches Heißpressen (CIC) ein schmelzbares Element in jede Nut eingegeben wird.

9. Verfahren zur Herstellung eines Wärmetauschermoduls nach einem der vorstehenden Ansprüche, bei dem die Metallplatten aus Carbonstahl, Edelstahl oder einer Legierung auf der Basis von Nickel oder Titan bestehen und der Schritt c) oder c1) durch isostatisches Heißpressen (CIC) oder einachsiges Heißpressen (CUC) ausgeführt wird und der Schritt f) durch Schweißen ausgeführt wird.

10. Verfahren zur Herstellung eines Wärmetauschermoduls nach Anspruch 9, bei dem die Zelle oder Zellen und ggf. der oder die Fluidkanäle durch eine Nut oder Nuten gebildet werden, die in einem keramischen Material wie etwa Graphit, Siliziumcarbid (SiC), Siliziumnitrid (Si₃M₄) oder einem nanolamellaren Material (Phase MAX) gebildet werden und die Schritte c) oder c1) und f) durch Löten ausgeführt werden.

11. Verfahren zur Herstellung eines Wärmetauschermoduls nach einem der vorstehenden Ansprüche, bei dem vor dem Schritt c) oder c1) wenigstens eine ebene Metallplatte (12.1, 12.2) an die nicht bearbeitete Seite einer mit einer Nut oder Nuten versehenen Metallplatte angesetzt wird, wobei die Seite der anderen ebenen Metallplatte, die derjenigen Seite entgegengesetzt ist, die an die mit Nuten versehene Platte angesetzt ist, eine Außenseite des Wärmetauschermoduls bildet, die dazu bestimmt ist, mit einem Wärmestrom aus der Umgebung in Kontakt zu kommen.

12. Wärmetauschermodul (1) mit wenigstens einem Fluidkreislauf, der wenigstens einen Strömungskanal (13, 13.1, 13.2) für ein Fluid, wenigstens eine Zelle, die ein Latentwärmespeichermaterial (MCP) in der Form eines Salzes oder einer Metalllegierung enthält, wobei die wenigstens eine Zelle durch Wände (10) aus wenigstens einer ersten Metallplatte (10.1, 10.2, 10.3) begrenzt wird, die durch Schweißen, durch Diffusionsschweißen oder durch Löten mit einer zweiten Metallplatte (10.1, 10.2, 10.3) verbunden ist, und eine Abschlussplatte, die mit der einen oder anderen der ersten und zweiten Metallplatten verschweißt ist und jedes offene Ende jeder mit dem Latentwärmespeichermaterial MCP gefüllten Zelle abschließt, oder einen oder mehrere Behälter aufweist, die mit dem Latentwärmespeichermaterial MCP gefüllt und in der wenigstens einen Zelle aufgenommen sind.

13. Wärmetauschermodul nach Anspruch 12, mit wenigstens einer Außenfläche (12.1), die dazu bestimmt ist, mit einem Wärmestrom aus der Umgebung in Kontakt zu kommen.

14. Verwendung eines Wärmetauschermoduls nach einem der Ansprüche 13 oder 14, bei dem der Wärmeaustausch zwischen dem Wärmestrom aus der Umgebung bei hohen Temperaturen stattfindet.

15. Verwendung nach Anspruch 14, zum Speichern von Wärme im Hinblick auf ihre anderweitige Verwendung oder zum Glätten von Temperaturschwankungen des Fluidkreislaufs.

## Claims

1. A process for producing a heat exchanger module (1) comprising at least one fluid circuit (13, 13.1, 13.2) and comprising at least one fluid circulation channel (13), at least one cell (15) containing a phase-change material (PCM), wherein each channel is adjacent to at least one cell, the process comprising the following steps:
a/ machining at least one groove in a metal plate (10.1, 10.2, 10.3), the groove being open at at least one of its ends;
b/ positioning another metal plate (10.1, 10.2, 10.3) against the machined plate so that at least one groove of the machined plate delimits a portion of a cell;
c/ assembling the metal plates with one another, either by hot isostatic pressing (HIP), or by hot uniaxial pressing (HUP) so as to obtain diffusion welding between the metal plates, or by brazing, at least one groove of the machined plate assembled with the other plate delimiting a cell that is open at at least one of its ends;
d/ filling each cell with a phase-change material (PCM) of metal alloy or salt type, either by pouring the PCM material in the liquid state or by inserting the PCM material in the solid state;
e/ positioning another metal plate, referred to as a closure plate, against the already assembled plates so as to close each open end of each cell filled with PCM material;
f/ assembling the closure plate with the already assembled plates either by welding or by brazing.

2. A process for producing a heat exchanger module (1) comprising at least one fluid circuit (13, 13.1, 13.2) and comprising at least one fluid circulation channel (13), at least one cell (15) containing a phase-change material (PCM), wherein each channel is adjacent to at least one cell, the process comprising the following steps:
a1/ machining at least one groove in a metal plate (10.1, 10.2, 10.3);
b1/ filling at least one container with a phase-change material (PCM) of metal alloy or salt type, either by pouring the PCM material in the liquid state or by inserting the PCM material in the solid state;
b2/ placing under vacuum and rendering leaktight the container(s) filled with PCM material;
b3/ fitting the container(s) into the groove(s);
b4/ positioning another metal plate (10.1, 10.2, 10.3) against the machined plate so that at least one groove of the machined plate delimits a portion of a cell containing the container(s) filled with PCM material;
c1/assembling the metal plates with one another and with the container(s), either by hot isostatic pressing (HIP), or by hot uniaxial pressing (HUP) so as to obtain diffusion welding between the metal plates and container(s), or by brazing, at least one groove of the machined plate assembled with the other plate delimiting a cell containing the container(s) filled with PCM material.

3. The process for producing a heat exchanger module as claimed in claim 1 or 2, according to which the wall of one of the metal plates assembled according to step c/ or c1/ forms a portion of a channel of a fluid circuit of the exchanger.

4. The process for producing a heat exchanger module as claimed in one of claims 1 to 3, according to which step a/ or a1/ is carried out so as to obtain at least one groove that is open at both its ends, the steps b/ and c/ or b4/ and c1/ making it possible to obtain at least one groove of the machined plate assembled with the other plate that delimits a fluid circulation channel that is open at both its ends, the steps d/ to f/ not being carried out, so as to leave the fluid circulation channel open at both its ends, said channel forming a channel of a fluid circuit of the exchanger.

5. The process for producing a heat exchanger module as claimed in one of the preceding claims, according to which the other metal plate positioned and assembled according to step b/ and c/ or b4/ and c1/ is also machined with at least one groove that is open at at least one of its ends and that forms a portion of a cell.

6. The process for producing a heat exchanger module as claimed in one of the preceding claims, according to which the steps a/ to f/ or a1/ to c1/ are carried out so as to create a set of fluid channels defining two separate circuits and a set of cells containing a PCM material.

7. The process for producing a heat exchanger module as claimed in one of the preceding claims, according to which, prior to the hot isostatic pressing (HIP) step c/ or c1/, a preformed tube is inserted into each groove, the tube forming a portion of a cell for containing the PCM material or a portion of a channel of a fluid circuit of the exchanger.

8. The process for producing a heat exchanger module as claimed in one of the preceding claims, according to which, prior to the hot isostatic pressing (HIP) step c/ or c1/, a fusible element is inserted into each groove.

9. The process for producing a heat exchanger module as claimed in any one of the preceding claims, according to which the metal plates are made of carbon steel, stainless steel, or of a nickel-based or titanium-based alloy, step c/ or c1/ being carried out by (HIP) pressing or by (HUP) pressing and step f/ being carried out by welding.

10. The process for producing a heat exchanger module as claimed in claim 9, according to which the cell(s) and where appropriate the fluid circulation channel(s) consisting of grooves machined in a ceramic material, such as graphite, silicon carbide (SiC), silicon nitride (Si₃N₄) or a nano-lamellar material (MAX phase), steps c/ or c1/ and f/ being carried out by brazing.

11. The process for producing a heat exchanger module as claimed in one of the preceding claims, according to which, prior to step c/ or c1/, at least one flat metal plate (12.1, 12.2) is positioned against the non-machined face of a grooved metal plate, the face of the other flat metal plate opposite that positioned against a grooved plate forming the outer face of the exchanger module intended to be in contact with a heat flux originating from a surrounding medium.

12. A heat exchanger module (1) comprising at least one fluid circuit comprising at least one fluid circulation channel (13, 13.1, 13.2), at least one cell containing a phase-change material (PCM) of metal alloy or salt type, at least the cell(s) being delimited by walls (10) of at least one first metal plate (10.1, 10.2, 10.3) either welded, or diffusion welded, or brazed to a second metal plate (10.1, 10.2, 10.3), and comprising either a closure plate welded to one and/or the other of the first and second metal plates, and closing each open end of each cell filled with PCM material, or (a) container(s) filled with PCM material contained in the at least one cell.

13. The heat exchanger module as claimed in claim 12, comprising at least one outer face (12.1) intended to be in contact with a heat flux originating from a surrounding medium.

14. The use of a heat exchanger module as claimed in claim 12 or 13, wherein the heat exchanges between the heat flux originating from the surrounding medium are carried out at high temperatures.

15. The use as claimed in claim 14, for storing the heat with a view to the later use thereof or for smoothing out the temperature fluctuations of the fluid circuit.
